Europäisches Patentamt

European Patent Office

Office européen des brevets

(19)

(11) Veröffentlichungsnummer : **0 018 566**
**B1**

(12) **EUROPÄISCHE PATENTSCHRIFT**

(45) Veröffentlichungstag der Patentschrift :
07.11.84

(21) Anmeldenummer : 80102118.9

(22) Anmeldetag : 19.04.80

(51) Int. Cl.³ : **F 24 D 19/10, G 05 D 7/01,
G 01 K 17/08**

(54) Anlage zum Steuern eines diskontinuierlich strömenden Materialstromes und zum Messen eines diesem Materialstrom und einer zweiten physikalischen Grösse proportionalen Wertes.

(30) Priorität : 25.04.79 CH 3875/79
10.04.80 CH 2754/80

(43) Veröffentlichungstag der Anmeldung :
12.11.80 Patentblatt 80/23

(45) Bekanntmachung des Hinweises auf die Patenterteilung : 07.11.84 Patentblatt 84/45

(84) Benannte Vertragsstaaten :
AT BE CH DE FR GB IT LI LU NL SE

(56) Entgegenhaltungen :
AT-A- 307 668
AU-A- 490 808
CH-A- 388 054
DE-A- 2 115 290
DE-A- 2 300 387
DE-B- 2 512 361
FR-A- 1 589 170
US-A- 2 633 749

(73) Patentinhaber : Lampert, Heinz
Schulhausstrasse 29
CH-9470 Buchs (CH)

Lanker, Willy
In der Gandstrasse 10
CH-8126 Zumikon (CH)

(72) Erfinder : Lampert, Heinz
Schulhausstrasse 29
CH-9470 Buchs (CH)

(74) Vertreter : Troesch, Hans Alfred, Dr. Ing. et al
Walchestrasse 19
CH-8035 Zürich (CH)

**0 018 566**

**Beschreibung**

Die vorliegende Erfindung betrifft eine Anlage zum Steuern eines diskontinuierlich strömenden Materialstromes und zum Messen eines diesem Materialstrom und einer zweiten physikalischen Grösse proportionalen Wertes, insbesondere zum Messen von Wärmemengen, vorzugsweise für den Teil einer Zentralheizungsanlage in einem Zimmer, mit einem selbstregelnden Stromventil zum Durchlassen eines konstanten Materialstromes.

Zum Stande der Technik gehören Verfahren zum Messen von wohnungsweiser Abgabe von Wärme in zentralen Heizsystemen, bei welchen Verfahren die im System zirkulierende Wassermenge konstant gehalten wird und bei welchen diese Wassermenge und die Temperaturdifferenz des in den Wohnungsheizungsteil einströmenden und aus diesem ausströmenden Wassers gemessen und mit dem konstant durchfliessenden Wasserfluss und der Zeit multipliziert, die in dieser Zeit abgegebene Wärmemenge gemessen wird.

Zu diesem Zwecke bedient sich diese Anlage einer Umlaufpumpe konstanter Fördermenge, einer sog. positiv fördernden Pumpe, wie sie Rotationskolbenpumpen oder Flügelpumpen darstellen. Dieses Vorgehen bedingt jedoch spezifische teure Anlageteile, wie beispielsweise eine derartige positiv fördernde Pumpe. Zudem ist dadurch die Sicherstellung nicht erreicht, dass ein gleichmässiger Wasserfluss die verschiedenen Wohnungen durchströmt, wodurch beim Wärmezähler, der mit einer konstanten Menge rechnet, Fehler auftreten können (FR-A-935 963).

Es ist auch eine Vorrichtung zur Messung der Strömungsgeschwindigkeit eines längs eines wandströmenden Mediums bzw. von von demselben transportierenden Wärmemengen bekannt geworden, wobei ein im Medium befindlicher von der Wandwärme isolierter Teil eines wärmeleitenden Körpers vom Medium erwärmt oder abgekühlt wird. Von diesem Körper wird ein anderer aus der entgegengesetzten Seite der Wand befindlicher Teil mit einem wärmeleitenden Mittel anderer Temperatur als dem vorgenannten Medium in wärmeleitende Verbindung gebracht. Eine Mesvorrichtung dient der Messung des Temperaturunterschiedes zwischen zwei verschiedenen Teilen des wärmeleitenden Körpers. Eine derartige Vorrichtung ist kompliziert im Aufbau und daher teuer und eignet sich nicht für den Einbau im Zentralheizungssystem in Wohnblöcken zum einfachen Messen der in jeder Wohnung verbrauchten Wärmemenge (CH-A-268 203).

Aus der AT-B-307 668 ist ferner eine Vorrichtung zur Bestimmung der verbrauchten Wärmemenge einer Zentralheizungsanlage bekannt geworden, welche Konstanthaltung der Temperaturdifferenz voraussetzt und die ein eine konstante Durchflussmenge durchlassendes Regelventil aufweist, welches sich zudem in einem Primärkreis befindet, während die einzelnen Wärmeverbraucher (Heizkörper) sekundärseitig angeschlossen sind.

Diese Vorrichtung kann aber die wichtige Aufgabe, die mit der vorliegenden Erfindung gelöst wird, nicht lösen :

— Der Wärmeverbrauch der einzelnen Heizkörper kann nicht bestimmt werden.

— Zudem könnte die Temperaturdifferenz am einzelnen Heizkörper in der Praxis nicht konstant gehalten werden (was Voraussetzung wäre).

— Die notwendige gleichzeitige thermostatische Regelung jedes Heizkörpers durch das Auf/Zu-Durchflussventil ist nicht vorhanden.

Ähnlich der obgenannten Schrift wird auch in der FR-A-1 589 170 an einem Reservoir mittels bypass-Mischung eine konstante Temperaturdifferenz erzeugt und vorausgesetzt, während die Durchflussmenge nicht konstant gehalten wird. Es kann nur der Wärmeverbrauch der ganzen Anlage gemessen werden. Die einzelnen Heizkörper können auch hier nicht separat erfasst und geregelt werden.

Die vorliegende Erfindung basiert auf der Aufgabe der Schaffung einer Anlage, welche erlaubt, auf möglichst einfache Weise das Produkt zweier miteinander verbundener Grössen, beispielsweise Materialmenge und Temperatur, zu messen, wie dies beispielsweise beim Messen von Wärmemengen in Teilen von Zentralheizungssystemen wünschbar ist oder zum gleichmässigen Dosieren vorbestimmter Materialmengen in vorbestimmten Zeiten.

Diese Aufgabe löst die erfindungsgemässe Anlage, welche gekennzeichnet ist durch ein mit dem Stromventil in Serie geschaltetes, von einer dritten, äusseren physikalischen Grösse servogesteuertes Auf/Zu-Materialdurchgangsventil mit einem Steuerteil und einem Durchflussteil, welcher Oeffnungs- und Schliesszeiten aufweist, die im Vergleich zur Impulsdauer so klein sind, dass dieser Durchflussteil mindestens annähernd mit rechteckigen Impulsverläufen arbeitet sowie durch eine Einrichtung zum Messen der zweiten physikalischen Grösse und zum Bestimmen des dieser Grösse proportionalen Wertes im geöffneten Zustand des Durchgangsventils, welcher Zustand durch eine Detektorvorrichtung festgestellt wird.

Der Erfindungsgegenstand wird anschliessend anhand von Figuren erläutert.

Es zeigen :

Figur 1  das Schema einer Wärmetauschanlage mit einem Durchflusswärmezähler,

Figur 2  ein Auf/Zu-Durchgangsventil im Längsschnitt in geschlossener Lage,

Figur 3  eine perspektivische Darstellung des inneren Gehäuses des Ventils nach Fig. 2,

Figur 4  einen Längsschnitt durch ein Stromventil in Ruhelage,

Figur 5   einen Ausschnitt aus einer Variante eines Ventils nach Fig. 2,

Figur 6   einen Ausschnitt aus einer weiteren Variante nach Fig. 2,

Figur 7   eine Schaltungsanordnung zum Schema nach Fig. 1,

Figur 8   eine weitere Variante der Schaltungsanordnung nach Fig. 7,

Figur 9   eine Ausführungsform der Variante nach Fig. 8, mit zwei Peltier-Elementen,

Figur 10   einen diskret aufgebauten Frequenzspannungswandler, wie in den Fig. 1, 7, 8 dargestellt.

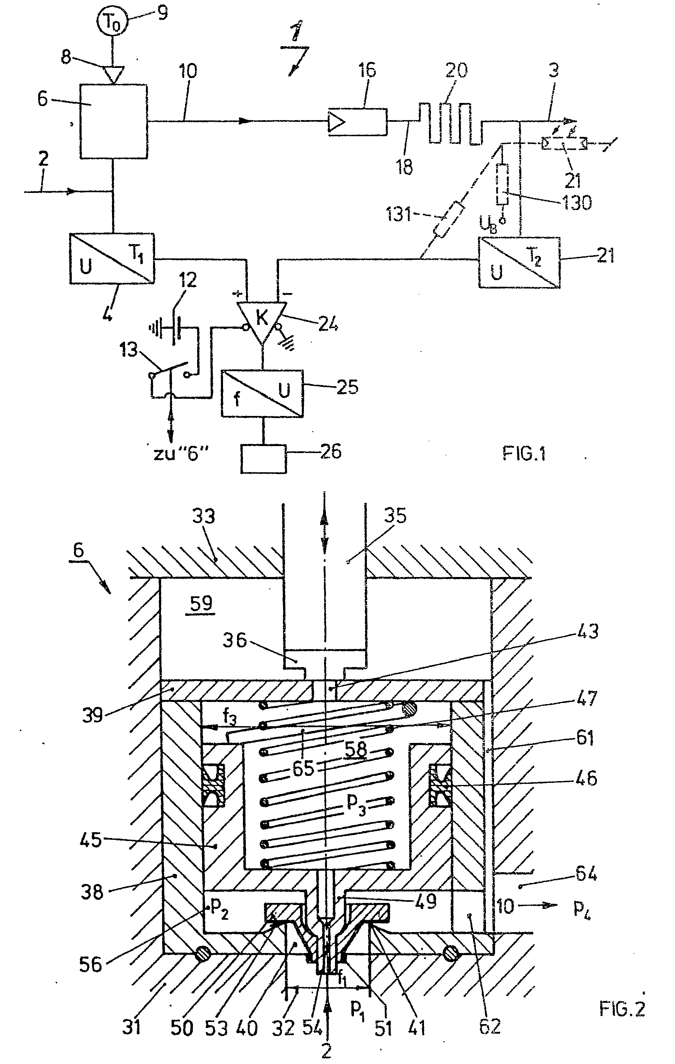

Eine Wärmetauschanlage 1, es kann beispielsweise der Teil einer Zentralheizungsanlage in einem Zimmer sein, weist einen Warmwasserzufluss 2 und einen Warmwasserabfluss 3 auf. Ein Temperaturfühler 4, beispielsweise ein Widerstandsthermometer PTC oder NTC, ein Peltierelement oder ein Bimetallelement, fühlt die Temperatur im Warmwasserzufluss 2 ab. Das Warmwasserversorgerrohr führt zu einem thermostatgesteuerten Durchgangsventil 6, dessen Aufbau in Fig. 2 ersichtlich ist. Ein Steuerventil 8 wird von einem Raumthermostaten 9 gesteuert. Die Lage des Durchgangsventils 6 ist enweder offen oder zu. Diese Lage wird grundsätzlich durch den Raumthermostaten 9 bestimmt. Dieser wiederum reagiert auf die Temperatur des Raumes, in dem sich der Wärmetauscher, z. B. ein Heizungsradiator, befindet. Es ist natürlich auch möglich, dieses Ventil 6 durch einen Thermostaten in einem anderen Raum oder durch einen Aussenthermostaten oder eine andere, sinngemässe Steuerung steuern zu lassen. Der Warmwasserzufluss zum Durchgangsventil 6 erfolgt bei 2, während bei offenem Ventil 6 das Wasser durch eine Leitung 10 weiterfliesst, in ein sog. Stromventil 16, ein Ventil, welches die Durchflussmenge auf einen konstanten Wert regelt. Es verkleinert den Durchflussquerschnitt bei steigender Druckdifferenz im Medium und vergrössert ihn bei sinkender Druckdifferenz, derart, dass der geregelte Querschnitt, multipliziert mit der der Druckdifferenz entsprechenden Geschwindigkeit, einen konstanten, dem SOLL-wert entsprechenden IST-Wert aufweist.

Anschliessend gelangt das Warmwasser über eine Leitung 18 in einen Wärmetauscher 20 und von dort in den Warmwasserabfluss 3. Nach dem Wärmetauscher 20 ist wiederum ein Temperaturfühler 21, vorzugsweise in Form eines Widerstandsthermometers PTC oder NTC oder eines Peltierelementes resp. Bimetallelementes eingebaut. Da Das durchströmende Volumen entweder Null oder grösser und konstant ist, bedarf es nur der Integration der jeweiligen momentanen Temperaturdifferenzwerte zwischen den Temperaturen am Eingang der Anlage und am Ausgang, d. h. der Temperaturen $T_1$ und $T_2$ der beiden Widerstandsthermometerfühler 4 und 21.

Da der Wert der Temperatur in den als Temperatur/Spannungswandler ausgebildeten Widerstandsthermometern durch die elektrische Spannung messbar ist, werden die beiden Spannungen der Thermometer 4 und 21 einem Operationsverstärker 24 zugeführt, in welchem ein der Temperaturdifferenz $(T_1-T_2)$ entsprechendes Ausgangssignal gebildet wird, mit dem Faktor K verstärkt.

Die resultierende Ausgangsspannung wird auf einen Spannungs/Frequenzwandler 25 geführt. Diesem ist ein Zähler 26 nachgeschaltet, so dass auf digitalen Anzeigefeldern direkt die in der wahlweise betrachteten Zeitspanne an den Raum abgegebene Wärmemenge ablesbar ist.

In Fig. 2 ist das thermostatgesteuerte, in allen seinen Einzelteilen erfindungswesentliche Durchgangsventil 6 in seinem grundsätzlichen Aufbau mim Schnitt ersichtlich. Der Warmwasserzufluss 2 führt zu einer Einlaufbohrung 32 im Boden eines äusseren Ventilgehäuses 31 zum Ventil 6. Ein Deckel 33 schliesst das äussere Ventilgehäuse 31 ab. Der Warmwasserzufluss 2 wird in die Einlaufbohrung 32 geführt. Durch den Gehäusedeckel 33 ragt eine Betätigungsstange, welche beispielsweise vom Thermostatfühler des Thermostaten 9 (Fig. 1) betätigt wird. An der freien Stirnseite der Betätigungsstange 35 befindet sich eine Dichtung 36. Im Ventilgehäuse 31 ist ein zylinderförmiger Gehäuseeinsatz 38 eingeschoben, der mittels eines Deckels 39 abgedeckt ist. Der Bodenteil des Gehäuseeinsatzes 38 ist mit einer Bohrung 40 und einem diese umrandenden Ventilsitz 41 versehen. Der Deckel 39 ist mit einer Steuerbohrung 43 versehen.

Im Gehäuseeinsatz 38 befindet sich ein topfförmiger Kolben 45 mit einer Ringdichtung 46. Im Hohlraum des Kolbens 45 ist eine Schraubenfeder 47 vorgesehen, deren eines Ende am Boden des Kolbens 45 und deren anderes Ende am Dekkel 39 anliegt. Unten am Kolben 45 befindet sich ein Kolbenfortsatz 49, welcher Träger eines auf diesem beweglich verbundenen Ventilkörpers 50 ist, der mitsamt seinem Gummibelag 53 mittels eines Rückhaltefederringes 51 am Fortsatz 49 befestigt ist. Durch den Kolbenfortsatz 49 hindurch führt eine Nebenstrombohrung 54. Der Ventilkörper 50 dient dazu, bei geschlossenem Ventil den Abflussraum 56 von der Einlaufbohrung 32 zu trennen. Die Nebenstrombohrung 54 führt zu einem Kolben/Zylindernebenstromraum 58, der seinerseits durch die Deckelsteuerbohrung 43 mit einem Gehäusenebenstromraum 59 strömungsverbunden ist. Eine Längsfase am Gehäuseeinsatz 38 lässt im zusammengebauten Zustand des Ventils 6 einen Nebenstromkanal 61 entstehen, in dessen unteren Teil eine radiale Ausströmöffnung 62 mündet, welche aus dem Abflussraum 56 führt. Dieser Ausströmöffnung 62 gegenüber und zu dieser versetzt angeordnet, befindet sich im Gehäuse eine Abflussöffnung 64, deren Durchmesser grösser ist als die Ausströmöffnung 62, wobei in einem Schnitt mittels der Ebene durch die beiden Oeffnungsachsen die Verbindungslinie der beiden höchstgelegenen Mantellinien der zwei Oeffnungen 62 und 64 gemäss Fig. 2 vorzugsweise einen Winkel bezüglich den Oeffnungsachsen von 15 bis 20° bildet, einen Oeffnungswinkel, welcher einen wirkungsvollen Diffusor bzw. Injektor auszeichnet.

Die obere Seite des Kolbens 45 betätigt einen Hebel 65, welcher schematisch in Fig. 2 dargestellt ist, der seinerseits einen Schalter 13 zum Stromkreis mit der Batterie 12 öffnet und schliesst.

**0 018 566**

Die Eintrittswirkfläche auf den Ventilkörper 50 ist mit $f_1$, der in der Leitung 2 herrschende Druck mit $p_1$ bezeichnet. Der Druck im Abflussraum 56 ist $p_2$, während die zu seinem grössten Durchmesser gehörende Fläche mit $f_3$ bezeichnet ist. Der Druck in der Leitung 10 ist $p_4$.

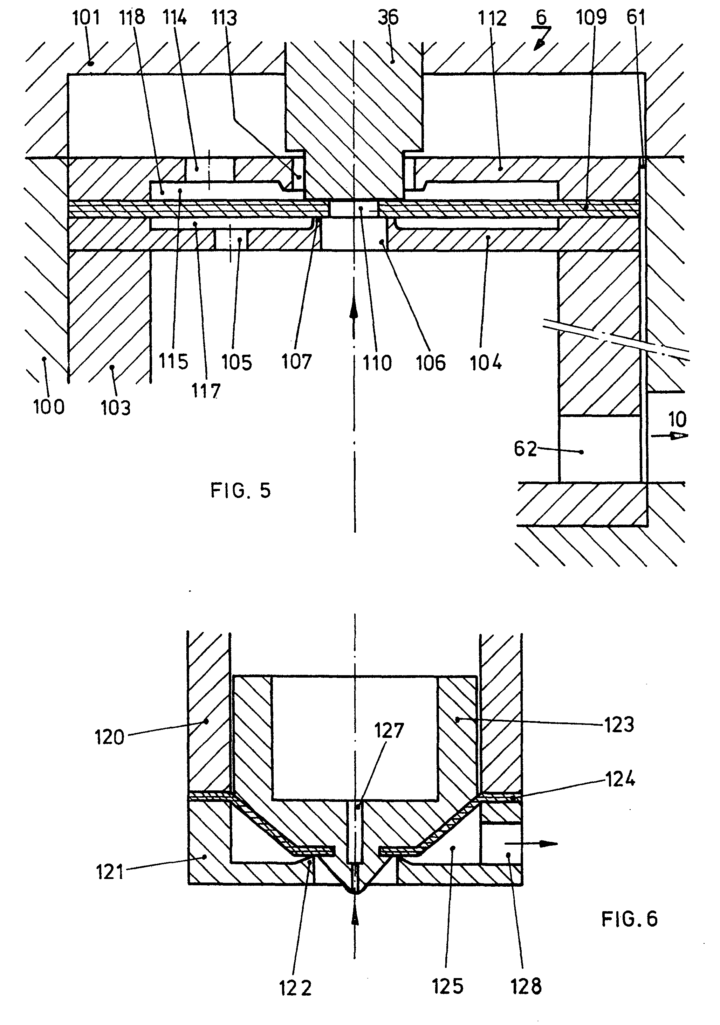

Dem Ventil 6 ist über die Leitung 10 das Stromventil 16 nachgeschaltet, welches in Fig. 4 im Längsschnitt dargestellt ist und in der Folge erläutert wird.

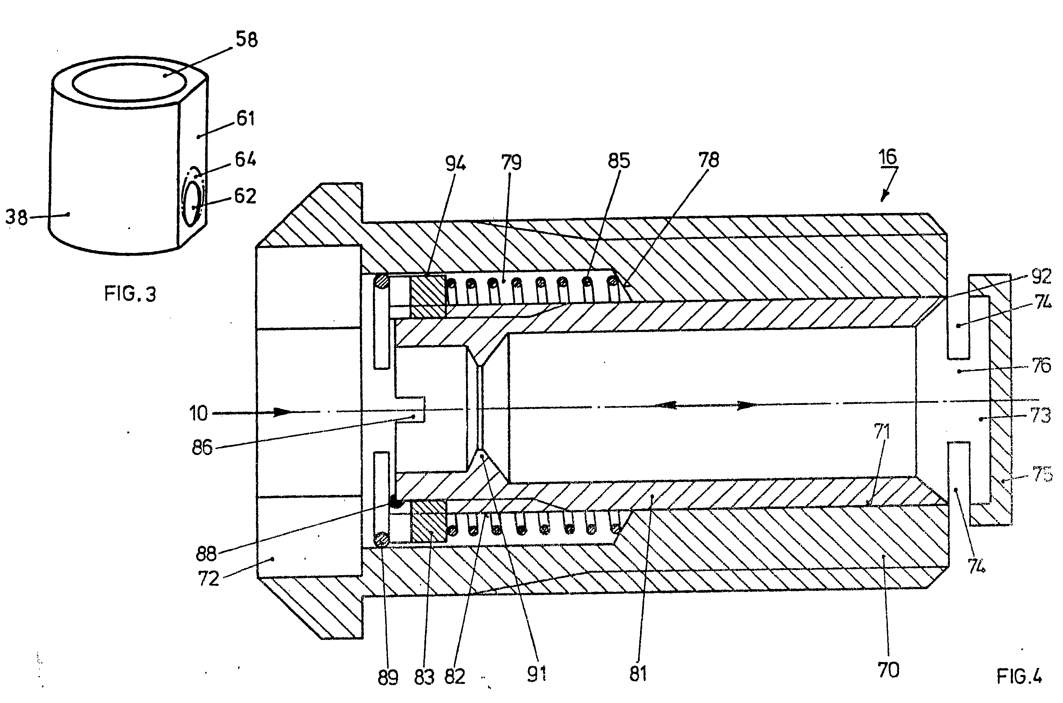

Dieses Stromventil 16, welches sich durch einen selbstgeregelten konstanten Wasserdurchfluss auszeichnet, weist ein äusseres flanschrohrähnliches Gehäuse 70 mit einer mittigen Bohrung 71 auf. Im Flansch ist ein Innensechskant 72 vorgesehen, um das Ventil 16 montieren zu können. Am anderen Ende des Gehäuses 70 befindet sich ein Endzapfen 73 mit zwei im Umfang eingefrästen Fenstern 74. Der Boden 75 des Endzapfens 73 ist über zwei umfängliche Stege 76 mit dem Mantel des Gehäuses 70 verbunden. Die Innenbohrung 71 geht über einen Absatz 78 in eine zylinderische Ausnehmung 79 über. In der Innenbohrung 71 ist ein Dosierkolben 81 verschiebbar angeordnet. Dessen oberer Teil trägt ein Aussengewinde 82 mit einer Stellmutter 83. In der Ausnehmung 79 befindet sich eine Schraubenfeder 85, die einerends auf dem ringförmigen Absatz 78 und andernends auf der Stellmutter 83 aufliegt. Schraubenschlitze 86 im Umfang des Dosierkolbens 81 erlauben die Lage der Stellmutter 83 mittels des Aussengewindes 82 entsprechend zu verstellen und damit die Schraubenfeder 85 zu tarieren. Nach der Tarierung dient eine Lackversiegelung 88, ein ungewolltes Verstellen der Stellmutter 83 auf dem Dosierkolben 81 zu verhüten. Ein sich ungefähr über 2/3 des Umfanges erstreckender Federring 89 dient der achsialen Laufbegrenzung des Dosierkolbens 81. Im Dosierkolben 81 ist eine mittige Bohrung vorgesehen, welche in ihrem vorderen Teil als Kalibrierblende 91 ausgebildet ist. Das Kolbenende weist eine Steuerkante 92 auf. Zwischen dem Gehäuse 70 im Bereich der Ausnehmung 79 und dem Mantel der zylinderförmigen Stellmutter 83 ist ein Druckausgleichdrosselkanal 94 vorgesehen, welcher der Dämpfung der Bewegungen des Dosierkolbens 81 im Gehäuse 70 des Stromventils 16 dient. Die Funktionsweise des thermostatgesteuerten Durchgangsventils 6 und des anschliessenden Stromventils 16 in den in den Fig. 2-4 dargestellten Ausführungen ist die folgende :

Das vom Raumthermostaten 9 gesteuerte Durchgangsventil 6 befindet sich in der in Fig. 2 ersichtlichen Schliesslage.

Es wirkt dann öffnend auf den Ventilkörper 50 die Oeffnungskraft $f_1 \cdot p_1$, während die Kraft der Feder 47 sowie die Kraft $p_3 \cdot f_3$ die Schliesskräfte ergeben, wobei in dieser Lage der Druck $p_3$ dem Druck $p_1$ entspricht. Da Das Ventil 6 geschlossen ist, sind der Abflussraum 56, die Leitung 10 und das Stromventil 16 überdrucklos ($p_2 = p_4 = p_{aussen}$).

Das Stromventil 16 befindet sich in seiner vollen Oeffnungslage, in welcher die Stellmutter 83 am Federring 89 ansteht, da die Kraft der Schraubenfeder 85 ihn mitsamt dem Dosierkolben 81 in diese Lage schiebt. Die Steuerkante 92 legt die beiden Fenster 74 völlig frei.

Wenn nun infolge Absinkens der Raumtemperatur der Raumthermostat 9 die Betätigungsstange 35 nach oben bewegt (max. mit 0,02 mm/min), so gibt deren Dichtung 36 die Deckelsteuerbohrung 43 frei. Entsprechend dem Querschnittverhältnis der Deckelsteuerbohrung 43 und der Nebenstrombohrung 54 sinkt der Druck $p_3$ im Kolben/Zylinder-Nebenstromraum 58 kontinuierlich ab. Es strömt die durch die Nebenstrombohrung 54 weiterhin einströmende Menge durch die Deckelsteuerbohrung 43 in den Gehäusenebenstromraum 59, durch den Nebenstromkanal 61 in die Leitung 10 und durch das Stromventil 16 zum Verbraucher. Die Lage des Stromventils 16 ändert sich jedoch trotz der, weil geringen, durchfliessenden Wassermenge (Leckwasser) nicht. Der Druck $p_3$ nimmt ab, bis der federbelastete Kolben 45 im Gleichgewicht ist. Es ist dann vektoriell unter Vernachlässigung der Gewichte

$$p_1 \cdot f_1 + p_3 \cdot f_3 + K_f = 0.$$

Wenn $p_3$ weiter sinkt, öffnet der Ventilkörper 50. Daher steigt $p_2$.

Die auf den Ventilkörper 50 wirkende ungefähre Oeffnungskraft $f_1 \cdot p_1 + f_3(p_2 - p_3)$, welche nun überwiegt, schiebt, entgegen der Schliesskraft der Feder 47, $K_f$, den Kolben 45 nach oben und öffnet damit den Zufluss zum und durch den Abflussraum 56 immer mehr. Das Ventil öffnet sich mehr und mehr.

Der Druck $p_2$ im Abflussraum 56 wächst schnell an und der Dosierkolben 81 geht in seine obere Endlage, in der das Ventil 16 vollständig geöffnet ist. Der Wasserstrom ergiesst sich durch die Ausströmöffnung 62 und die Gehäuseabflussöffnung 64, wobei er, bedingt durch die Diffusorwirkung, dieses mit einigen Metern Geschwindigkeit ausschiessenden Strahles auf das sich im Nebenstromkanal 61 befindende Wasser eine Saugwirkung ausübt, was jegliches Aufstauen und Aufbauen einer in Schliessrichtung wirkenden Wasserkraft verhütet. Diese Saugwirkung erniedrigt $p_3$ und hat daher einen ventilöffnenden Einfluss.

Das dann in das Stromventil 16 einschiessende Wasser erfährt an der Blende 91 eine Stauung, weshalb es eine den Dosierkolben 81 aus seiner Ruhelage schiebende Kraft ausübt. Daher wird die Steuerkante 22 über die beiden Fenster 74, diese teilweise deckend, geschoben. Es baut sich nun im Raum nach der Blende 91 ein Gegendruck auf, welcher den Dosierkolben 81 in seine Oeffnungslage zurück zu schieben trachtet. Dabei wird ein Teil der Fenster 74 wieder freigelegt. Der Dosierkolben 81 bewegt sich mithin so lange, bis die an ihm angreifenden Kräfte im Gleichgewicht sind, d. h. die Schliesskraft der Schraubenfeder 85 und die Kraft des einströmenden Wassers auf die Blende 91 einerseits und die Schliesskraft des sich nach der Blende 91 aufbauenden Druckes sich die Waage halten.

4

Wenn mithin das Durchgangsventil 6, wie erläutert, sich sehr schnell öffnet oder sich ebenso schliesst, geht der Dosierkolben 81 sehr schnell in seine besprochene Gleichgewichtslage oder in seine Endruhelage.

Um ein Schwingen des Dosierkolbens 81 beim Einpendeln in seine Gleichgewichtslage zu verhüten und gleichzeitig zur Sicherstellung des Druckausgleiches in der Ausnehmung 79 ist der Druckausgleichs-Drosselkanal 94 so bemessen, dass der Dosierkolben nicht in Schwingungen geraten kann.

Durch Verstellen der Schraubenfeder 47, welche die Strömung selbst in keiner Weise beeinflusst, im Ventil 6 und der Schraubenfeder 85 im Stromventil 16, können diese beiden den Durchflussverhältnissen der Anlage, in der sie zur Anwendung gelangen, angepasst werden.

Es wird mithin erreicht, dass das Auf/Zu-Durchgangsventil 6 verschwindende Oeffnungs- bzw. Schliesszeiten aufweist und mithin annähernd mit rechteckigen Impulsverläufen arbeitet, was sich auf die Genauigkeit der Wärmezählung natürlich günstig auswirkt.

Damit wird in Funktion einer zu steuernden Grösse, im vorliegenden Fall der Raumtemperatur, das Durchgangsventil 6 in seine Oeffnungs- oder in seine Schliesslage gesteuert. Befindet es sich in der Oeffnungslage, so strömt das Wasser von der Leitung 10 in das Stromventil 16, welches, entsprechend dem Druck des Wassers seinen Durchflusssquerschnitt mehr oder weniger öffnet, derart, dass die Durchflussmenge konstant bleibt. Das Wasser entweicht durch die Warmwasserleitung 18 und gelangt in den Wärmetauscher 20, wo es seine Wärme entsprechend dem Temperaturgefälle an den Raum abgibt und diesen aufheizt. Das kältere Wasser verlässt den Wärmetauscher 20 durch den Warmwasserabfluss 3.

Um zu bestimmen, wie gross die vom Wärmetauscher 20 im Verlauf der Zeit abgegebene Wärmemenge ist, wird im Operationsverstärker 24 die Spannungsdifferenz der beiden Widerstandsthermometer mit den Fühlern 4 und 21 gebildet und diese verstärkt. Entsprechend der verstärkten, jeweils momentanen Spannungsdifferenz werden im Wandler 25, entsprechend der Spannungsdifferenz, Impulse unterschiedlicher Folgen (Frequenzen) erzeugt, deren Anzahl fortlaufend gezählt wird und bei Erreichen einer vorbestimmten Zahl, z. B. l'000 Impulsen, den Stand des Zählers 26 um eine Einheit erhöhen. Auf diese Weise ist jederzeit am Zähler 26 ablesbar, wie gross die seit Zählbeginn durchgegangene Wärmemenge ist, eine Wärmemenge, die proportional der jeweiligen Temperaturdifferenz der Thermometerfühler 4 und 21 ist, da die durchströmende Wärmeträgermenge mittels des Stromventiles konstant gehalten wird.

In Fig. 5 ist eine weitere Möglichkeit einer Ausführung eines Steuerteils eines Durchgangsventils 6 dargestellt. Dieser Steuerteil sitzt in einem äusseren Ventilgehäuse 100 mit einem Deckel 101. In ihm ist ein Gehäuseeinsatz 103 mit einem als Begrenzungsanschlag 107 dienenden Zwischendeckel 104 eingeschoben, der eine Entlastungsöffnung 105 zum Verhüten eines Klebens einer Membran 109 am Deckel 104 und einen mittigen Durchgang 106 aufweist. Die Metallmembran 109 mit einer mittigen Nebenstrombohrung 110 ist ebenfalls seitlich gehalten. Ihr folgt ein Einsatzdeckel 112, der einen Führungsdurchgang 113 aufweist. Der Deckel 112 ist ferner mit einer Entlastungsöffnung 114 versehen sowie mit einer Eindrehung 115, welche bezüglich Tiefe der Hubhöle der Membran 109 entspricht. Dieses Schnappventil mit kalibriertem Hub arbeitet im wesentlichen leckfrei. Es ergibt zudem eine klare Temperaturdifferenz zwischen Ein- und Ausschalten. Diesem Steuerteil schliesst sich nun der Durchflussteil des Durchgangsventils, wie es Fig. 2 zeigt, an, mit Kolben 45, Feder 47, Ventilkörper 50, Ausströmöffnung 62 usw. Dieser Steuerteil ist zwar im Aufbau etwas komplizierter und empfindlicher gegen Druckstösse bei der Montage als der Steuerteil des Durchgangsventils gemäss Fig. 2.

Diesem Steuerteil des Durchgangsventils 6 ist ein Durchglussteil mit einer Ausströmöffnung 62 und einer Gehäuseabflussöffnung 64 analog der Ausführung nach Fig. 2 zugeordnet. Es gelangt das aus dem Raum 118 fliessende Wasser, welches mengenmässig sehr gering ist, auf die Oberseite des Einsatzdeckels 112. Es fliesst, wie bei der Konstruktion nach Fig. 2, seitlich durch den Nebenstromkanal 61 ab, wo es, wie erläutert, abgesaugt wird und in die Leitung 10 gelangt, welche dieses Leckwasser einem Stromventil, beispielsweise in der Art desjenigen gemäss Fig. 4, zuführt. Dieses Schnapp- oder Flip-Flop-Ventil weist eine sehr geringe bewegliche Masse auf und ist daher äusserst empfindlich. Im übrigen ist, wie erwähnt, seine Bauweise klein, was ermöglicht, es mühelos in bestehende Anlagen einzubauen.

In Fig. 6 ist der untere Teil eines Durchgangsventils im Sinne des Durchgangsventiles 6 dargestellt. Dieses Ventil weist ebenfalls einen Gehäuseeinsatz 120 mit einem Einsatzboden 121 auf, der einen ringförmigen Ventilsitz 122 hat. Im Gehäuseeinsatz 120 ist verschiebbar mit radial grossem Spiel ein Stüzkolben 123 vorgesehen, der in seinem unteren Teil eine Membrane 124 trägt. Diese ist seitlich zwischen Einsatz 120 und Einsatzboden 121 eingespannt und mittig im Stüzkolben 123, wie ersichtlich, gehalten. Der Stüzkolben ist mit einer Nebenstrombohrung 127 versehen. Es ist ferner der Abflussraum 125 sowie eine Auströmöffnung 128, analog der Ausführung nach Fig. 2, dargestellt. Die Funktionsweise ist gleich wie diejenige der Ausführung nach Fig. 2. Im Unterschied zu dieser weist aber die Konstruktion nach Fig. 6 einen Kolben mit Membrandichtung auf, dessen Vorteil darin besteht, dass seine Beweglichkeit nicht von der Beschaffenheit des Wassers, insbesondere dessen Kalkgehalt, abhängt. Es ist noch darauf hinzuweisen, dass die Bohrungen 54 in Fig. 2 resp. 127 in Fig. 6, kalibriert, einen beim Oeffnen und Schliessen des Ventils auftretenden Wasserschlag massgeblich dämpfen.

Es ist daher ausserordentlich einfach, mit statischen Mitteln, wie Thermostatfühlern und Widerstandsthermometern sowie entsprechenden elektronischen Wandlern und Zählern die abgegebenen Wärmemenge genau mit im Aufbau einfachen und daher billigen Bauelementen zu messen. Ein derartiger

5

Durchflusswärmezähler ist billig im Aufbau und sicher im Betrieb. Er stellt wenig Anforderungen an den Unterhalt und ist bei defekten Teilen leicht auszuwechseln.

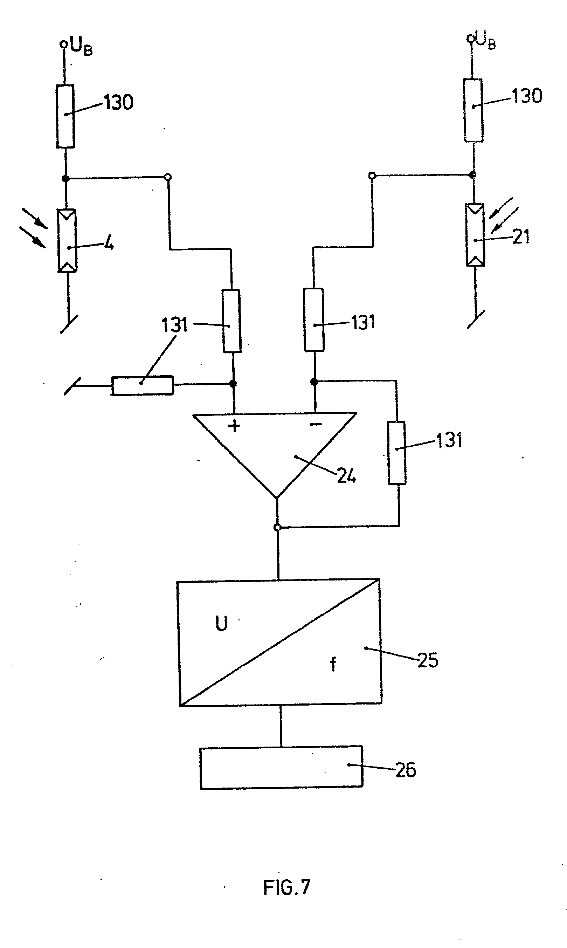

In Fig. 7 ist eine mögliche Schaltung für die Integration der Temperaturdifferenzen und mithin für die Bestimmung der abgegebenen Totalwärmemenge dargestellt. Dabei bezeichnet $U_B$ die Speisespannung, während zwei gewöhnliche Widerstände mit 130 bezeichnet sind. Die Widerstandsthermometerfühler 4 und 21 sind mit den Widerständen 130 in Serie geschaltet und an Erde gelegt, während die dazwischen abgegriffenen Spannungen über weitere gewöhnliche Widerstände 131 zum Operationsverstärker 24 führen, beschaltet, wie in jedem Lehrbuch auffindbar.

Die in diesem Wandler erscheinenden Frequenzen werden vom Zähler 26 erfasst. Der jeweilige Zählerstand gibt die gesamte abgegebene Wärmemenge an, wobei, je nach Konstruktion, der Zähler 26 auf Null rückstellbar ist.

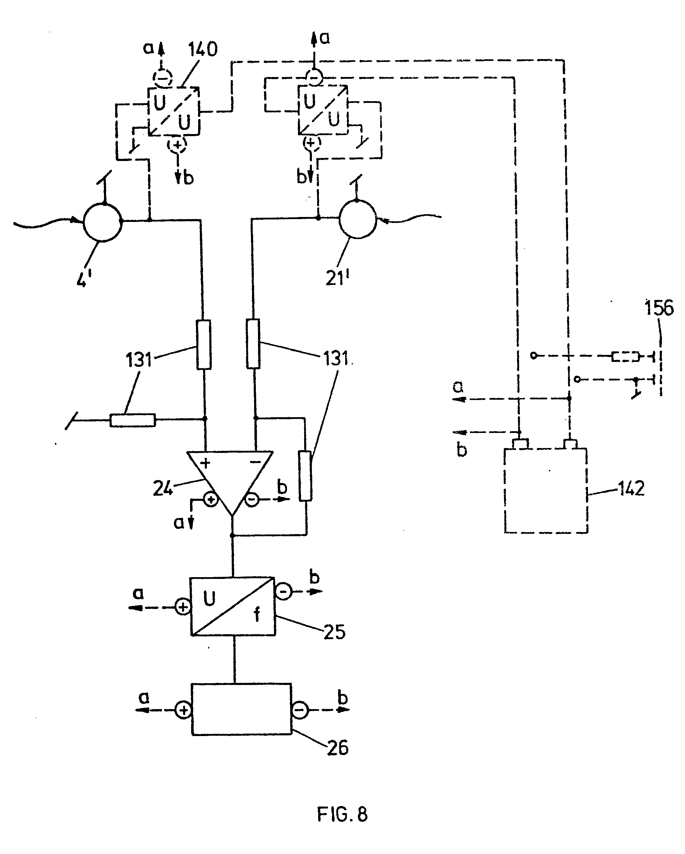

Werden anstelle von passiven temperaturvariablen Widerständen, wie in Fig. 7 dargestellt, aktive Elemente, wie Bimetall-Elemente oder Peltier-Elemente, verwendet, so ergibt sich eine Schaltung wie in Fig. 8 dargestellt. Hierbei sind die in Analogie zu Fig. 7 verwendeten Teile gleich bezeichnet. Während gemäss Fig. 7 passive Temperatur/Spannungswandler eine Speisespannung benötigen, brauchen aktive Wandler, wie Peltier-Elemente oder Bimetall-Elemente, wie bei 4' und 21' in Fig. 8 dargestellt, keine eigene Speisung. Die Tatsache, dass solche aktiven Elemente Leistung ohne elektrische Fremdleistung abgeben, eröffnet nun aber die höchst vorteilhafte Möglichkeit, die nachgeschaltete Elektronik, d. h. Verstärker 24, Spannungs/Frequenzwandler 25 und Zähler 26 durch diese aktiven Elemente, über einen Pufferakkumulator eigenzuspeisen. Dies drängt sich z. B. bei der Verwendung von Peltier-Elementen 4', 21' auf.

Wie in Fig. 8 gestrichelt eingezeichnet, wird dazu die Ausgangsspannung des Wandlers 4', $U_{a}$, sowie diejenige des Wandlers 21', je einem Spannungsvervielfacher 140 zugeführt, dessen Ausgangsspannungen in entsprechender Polarität über den Pufferakkumulator 142 stabilisiert, die erwähnten Elektronikbauteile speisen, mit symmetrischer ± Speisespannung, oder, wie in Fig. 1 angedeutet, mit lediglich einer Spannungspolarität. In Fig. 8 sind die Speisungsanschlüsse a, b mit den entsprechend bezeichneten Akkumulator-Anschlüssen verbunden.

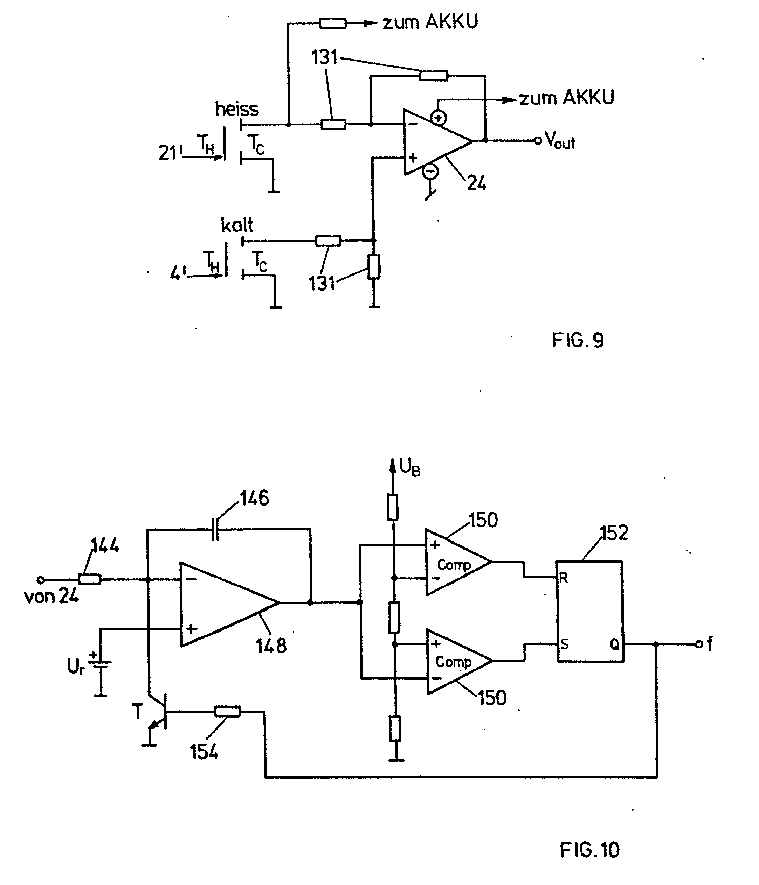

In Fig. 9 ist die spezifische Schaltung von zwei Peltier-Elementen 21' und 4' sowie des Verstärkers 24 gemäss Fig. 8 dargestellt. Dabei ist beispielsweise das Peltier-Element 21' gemäss Fig. 1 an der Einlaufseite und das Element 4' an der Auslaufseite der Leitung 10 angeordnet. Das einlaufseitig angeordnete Peltier-element 21' wird vorzugsweise ohne Verwendung von Spannungsvervielfachern 140 gemäss Fig. 8 zur Speisung des Akkumulators verwendet, welch letzterer in bekannter Art und Weise mittels eines Diodenelementes (nicht dargestellt) vor Entladen geschützt ist, falls die Peltier-Ausgangsspannung tiefer als die Akkumulatorspannung ist. Diese Anordnung liefert die monopolare Eigenspeisung der Elektronik.

Bevorzugterweise wird gemäss Fig. 10 für den Spannungsfrequenzwandler 25 eine diskret aufgebaute Schaltung verwendet. Das Ausgangssignal des Verstärkers 24 wird über ein Widerstanselement 144 einem als Integrator mit einer Rückkopplungskapazität 146 beschalteten Operationsverstärker 148 zugeführt, welchem zusätzlich eine Referenzspannung $U_r$ zugeschaltet ist. Der Ausgang des Verstärkers 148 wird einem Paar von Komperatoren 150 zugeführt, denen über einen Spannungsteiler, einseitig auf Erde, anderseitig auf die Speisespannung $U_B$ geschaltet, je eine Referenzspannung zugeführt ist. Die Ausgänge der Komperatoren 150 sind entsprechend auf Setz- und Rücksetzeingänge eines Flip-Flops 152 geführt, an dessen Q-Ausgang die eingangsspannungsgesteuerte Pulsfrequenz f erscheint. Der Ausgang Q des Flip-Flops 152 ist über ein Widerstandselement 154 auf die Basis eines Transistors T geführt, dessen Emitter mit Erde und dessen Kollektor mit dem Steuerspannungseingant des Verstärkers 148 verbunden sind. Um zu verhindern, dass die Peltier-elemente 21' und 4' gemäss Fig. 9, bedingt durch die Akkumulatorladung, unsymmetrisch belastet werden, können für die Ermittlung der Durchlauftemperaturunterschiede auch lediglich zwei Bimetallelemente gemäss Fig. 8 auf den Differenzverstärker 24 geführt sein und ein einzelnes Peltier-Element vorzugsweise auf der Hochtemperatureinlaufseite der Leitung 10 gemäss Fig. 1 angeordnet sein, lediglich um die Eigenspeisung der verwendeten Elektronik via Akkumulator sicherzustellen. In diesem Fall sind Temperaturfühler und Wandler für die Temperaturspeisespannungswandlung getrennt vorgesehen. In Fig. 8 ist diese Variante wiederum gestrichelt mit dem Peltier-Element 156 dargestellt.

Es werden die in folgender Tabelle bezeichneten Bauteile für den Aufbau des Elektronikteiles verwendet :

(Siehe Tabelle Seite 7 f.)

| Teil | Pos. No. | Hersteller |
|---|---|---|
| als Temperatur/Spannungswandler | | |
| NTC | 4, 21 | Philips |
| PTC | 4, 21 | Philips |
| Peltier | 4, 21 ; 4', 21', 156 | Combion 80 1.3960-01 |
| Operationsverstärker | 24, 148, 150 | ICL 761x |
| Zähler | 26 | TI (Texas Instr.) |
| | | SN 74161 |
| | | oder C-Mos |

**Ansprüche**

1. Anlage zum Steuern eines diskontinuierlich strömenden Materialstromes und zum Messen eines diesem Materialstrom und einer zweiten physikalischen Grösse proportionalen Wertes, insbesondere zum Messen von Wärmemengen, vorzugsweise für den Teil einer Zentralheizungsanlage in einem Zimmer, mit einem selbstregelnden Stromventil (16) zum Durchlassen eines konstanten Materialstromes, gekennzeichnet durch ein mit dem Stromventil (16) in Serie geschaltetes, von einer dritten, äusseren physikalischen Grösse servogesteuertes Auf/Zu-Materialdurchgangsventil (6) mit einem Steuerteil (9, 36, 43 bzw. 110) und einem Durchflussteil (41, 45, 50, 122, 123, 124), welcher Oeffnungs- und Schliesszeiten aufweist, die im Vergleich zur Umpulsdauer so klein sind, dass dieser Durchflussteil mindestens annähernd mit rechteckigen Impulsverläufen arbeitet sowie durch eine Einrichtung (4, 21, 24, 25, 26) zum Messen der zweiten physikalischen Grösse und zum Bestimmen des dieser Grösse porportionalen Wertes im geöffneten Zustand des Durchgangsventils (6), welcher Zustand durch eine Detektorvorrichtung (65) festgestellt wird.

2. Anlage nach Anspruch 1, dadurch gekennzeichnet, dass statische Mittel, wie Thermostatfühler und Widerstandsthermometer sowie elektronische Wandler und Zähler als Bauelemente einen Durchflusswärmezähler bilden.

3. Anlage nach Anspruch 1, dadurch gekennzeichnet, dass der Durchflussteil einen mit dem Ventilkörper (50) beweglich verbundenen, federbelasteten Kolben (45) aufweist, dessen Inneres (58) vorzugsweise über eine gesonderte Bohrung (54) mit der Zuströmseite (2) verbunden ist.

4. Anlage nach Anspruch 1, dadurch gekennzeichnet, dass das Stromventil (16) einen äusseren Zylinderteil (70) und einen in diesem gleitend angeordneten federbelasteten (85) gedämpften Hohlkolben (81) aufweist.

5. Anlage nach Anspruch 4, dadurch gekennzeichnet, dass der Zylinderteil (70) radiale Schlitze (74) aufweist, die mit dem Kolbeninnern in Strömungsverbindung stehen und durch Steuerkanten (92) des Kolbens (81) bezüglich Durchgangsquerschnitt steuerbar sind.

6. Anlage nach Anspruch 4, dadurch gekennzeichnet, dass die Feder (85) im Zylinder (70) angeordnet und über einen Vorspannungs-Einstellring (83) mit dem Kolben (81) wirkverbunden ist.

7. Anlage nach Anspruch 4, dadurch gekennzeichnet, dass der Kolben (81) eine Drosselstelle (91) aufweist.

8. Anlage nach Anspruch 1, dadurch gekennzeichnet, dass sie eine elektrische Eigenspeisung aufweist.

9. Anlage nach Anspruch 1 zum Messen von Wärmemengen, dadurch gekennzeichnet, dass mindestens zwei aktive Temperatur/Spannungswandler (4, 21) auf ein in der Zeit differenz-integrierendes Netzwerk (24, 25, 26) geschaltet sind.

10. Anlage nach Anspruch 1, dadurch gekennzeichnet, dass das den, vorzugsweise federbelasteten (47), Durchflussteil (41, 45, 50, 122, 123, 124) durchströmende Medium als Servosteuermedium dient.

11. Anlage nach Anspruch 1, dadurch gekennzeichnet, dass zur Steuerung des Steuerteils ein Thermostat (9), ein Zeitmesser, ein pH-Messer, ein Konzentrationsmesser oder ein Niveaumesser dient, wobei vorzugsweise ein kontinuierliches Signal des Thermostaten (9) mit der Temperatur als äussere physikalische Grösse bei zwei nahe beieinanderliegenden definierten Temperaturen im Durchflussteil ein definiertes Oeffnen und Schliessen bewirkt.

12. Anlage nach Anspruch 1, dadurch gekennzeichnet, dass auf der Abströmseite (56) des Durchflussteils (41, 45, 50, 122, 123, 124) eine das Servosteuermedium unter Ejektorwirkung haltende Saugstelle (62, 64), z. B. eine diffusorähnliche Abströmstelle des Materialflusses (10), vorgesehen ist.

13. Anlage nach Anspruch 1, dadurch gekennzeichnet, dass das Durchgangsventil im Durchflussteil und im Steuerteil je eine Bohrung (54, 127 bzw. 110, 43) aufweist, wobei diejenige (110, 43) im Steuerteil grösser ist als diejenige (54, 127) im Durchflussteil, um diesen rasch und wasserschlaglos zu öffnen und zu schliessen.

14. Anlage nach Anspruch 13, dadurch gekennzeichnet, dass der freie Ausströmquerschnitt der Bohrung (43, 110) im Steuerteil, z. B. mittels eines Thermostaten (9, 36), gesteuert ist.

15. Anlage nach Anspruch 1, dadurch gekennzeichnet, dass der Steuerteil eine Steuermembran (109) aufweist (Fig. 5).

16. Anlage nach Anspruch 1, dadurch gekennzeichnet, dass der Durchflussteil eine mit einem Kolben (123) verbundene Dichtungsmembran (124) aufweist, welche den Kolben (123) vom Abflussraum (125) trennt.

**Claims**

1. A system for controlling a discontinuously flowing flow of material and for measuring a value that is proportional to this flow of material and to a second physical quantity, more especially for measuring amounts of heat, mainly for the part of a central heating system in a room, comprising a self-regulating flow valve (16) for the passage of a constant flow of material, characterised by an open/closed material passage valve (6) which is connected in series with the flow valve (16) and is servo-controlled by a third external physical quantity and is provided with a control part (9, 36, 43 or 110) and a flow-through part (41, 45, 50, 122, 123, 124) which has opening and closing times which, compared to the pulse duration, are so short that this flow-through part works, at least approximately, with rectangular pulse patterns as well as by an apparatus (4, 21, 24, 25, 26) for measuring the second physical quantity and for determining the value that is proportional to this quantity in the opened state of the passage valve (6), which state is detected by a detector (65).

2. A system as claimed in Claim 1, characterised in that static means, such as thermostatic sensors and resistance thermometers, as well as electronic transducers and counters, as components, form a flow-through heat counter.

3. A system as claimed in Claim 1, characterised in that the flow-through part comprises a spring-loaded piston (45) which is movably connected to the valve body (50) and whose interior (58) is connected, preferably through a separate bore (54), to the inflow end (2).

4. A system as claimed in Claim 1, characterised in that the flow valve (16) comprises an external cylinder part (70) and a spring-loaded (85), damped hollow piston (81) which is slidingly arranged in the latter.

5. A system as claimed in Claim 4, characterised in that the cylinder part (70) has radial slots (74) which are in flow communication with the piston interior and are controllable relative to the cross-section of passage by control edges (92) of the piston (81).

6. A system as claimed in Claim 4, characterised in that the spring (85) is arranged in the cylinder (70) and is operatively connected to the piston (81) via a pre-tension setting ring (83).

7. A system as claimed in Claim 4, characterised in that the piston (81) has a throttling point (91).

8. A system as claimed in Claim 1, characterised in that it has its own power supply.

9. A system as claimed in Claim 1 and intended for measuring heat amounts, characterised in that at least two active temperature/voltage transformers (4, 21) are connected to a network (24, 25, 26) which integrates differences according to time.

10. A system as claimed in Claim 1, characterised in that the medium flowing through the throughflow part (41, 45, 50, 122, 123, 124), which is preferably spring-loaded (47), serves as a servo-control medium.

11. A system as claimed in Claim 1, characterised in that a thermostat (9), a timer, a pH meter, a concentration meter or a level meter serves for controlling the control part ; a continuous signal emitted by the thermostat (9), with the temperature as the external physical quantity of two defined temperatures which are close to each other, preferably causing a defined opening and closing in the flow-through part.

12. A system as claimed in Claim 1, characterised in that at the outflow end (56) of the flow-through part (41, 45, 50, 122, 123, 124) there is provided a suction point (62, 64) which subjects the servo-control medium to an ejector action, for example a diffuser-like outflow point of the flow of material (10).

13. A system as claimed in Claim 1, characterised in that the passage valve has a bore each (54, 127 and 110, 43) in the flow-through part and in the control part, the bore (110, 43) in the control part being larger than that (54, 127) in the flow-through part, so as to open and close the latter quickly and in a water-hammer-free manner.

14. A system as claimed in Claim 13, characterised in that the free outflow cross-section of the bore (43, 110) in the control part is controlled, for example, by means of a thermostat (9, 36).

15. A system as claimed in Claim 1, characterised in that the control part has a control diaphragm (109) (Fig. 5).

16. A system as claimed in Claim 1, characterised in that the flow-through part has a sealing diaphragm (124) which is connected to a piston (123) and which separates the piston (123) from the discharge chamber (125).

**Revendications**

1. Installation pour commander un courant de matière en écoulement discontinu et pour mesurer

**0 018 566**

une valeur proportionnelle à ce courant et à une deuxième grandeur physique, en particulier pour la mesure de masses de chaleur, de préférence pour la partie d'une installation de chauffage central dans une pièce, avec une soupape d'écoulement (16) autorégulatrice pour le passage d'un courant constant de matière, caractérisée par une soupape directe d'ouverture et de fermeture (6) en série avec la soupape d'écoulement (16) et asservie à une troisième grandeur physique extérieure, cette soupape directe comprenant une partie de commande (9, 36, 43 ou 110) et une partie d'écoulement (41, 45, 50, 122, 123, 124), qui présente des temps d'ouverture et de fermeture qui, par comparaison avec la durée d'une impulsion, sont si petits que cette partie de débit fonctionne au moins approximativement avec des impulsions en créneau ainsi que par un dispositif (4, 21, 24, 25, 26) pour la mesure de la deuxième grandeur physique et pour la détermination de la valeur proportionnelle à cette grandeur dans l'état ouvert de la soupape directe (6), lequel état est établi par un dispositif de détection (65).

2. Installation selon la revendication 1, caractérisée en ce que des moyens statiques tels qu'un capteur à thermostat et un thermomètre à résistance ainsi qu'un convertisseur et un compteur électroniques forment les éléments constructifs d'un compteur de chaleur en écoulement.

3. Installation selon la revendication 1, caractérisée en ce que la partie d'écoulement présente un piston (45) chargé par ressort et qui est relié mobile avec le corps (50) de la soupape, l'intérieur (58) de ce piston étant de préférence relié, par un alésage spécial (54) au côté d'arrivée (2).

4. Installation selon la revendication 1, caractérisée en ce que la soupape d'écoulement (16) présente une partie cylindrique extérieure (70) dans laquelle un piston creux (81), amorti et chargé par un ressort (85), est disposé coulissant.

5. Installation selon la revendication 4, caractérisée en ce que la partie cylindrique (70) présente des fentes radiales (74) qui sont en connexion d'écoulement avec l'intérieur du piston et peuvent être guidées par des bords de guidage (92) du piston (81) par rapport à la section transversale du passage.

6. Installation selon la revendication 4, caractérisée en ce que le ressort (85) est disposé dans le cylindre (70) et est relié fonctionnellement, par une bague de réglage prétendue (83), au piston (81).

7. Installation selon la revendication 4, caractérisée en ce que le piston (81) présente une zone d'étranglement (91).

8. Installation selon la revendication 1, caractérisée en ce qu'elle comporte sa propre alimentation électrique.

9. Installation selon la revendication 1 pour la mesure de masses de chaleur, caractérisée en ce qu'au moins deux convertisseurs température/tension (4, 21) sont mis en circuit dans un réseau intégrant la différence dans le temps (24, 25, 26).

10. Installation selon la revendication 1, caractérisée en ce que le fluide traversant la partie d'écoulement (41, 45, 50, 122, 123, 124) de préférence chargée par un ressort (47), est utilisé comme fluide d'asservissement.

11. Installation selon la revendication 1, caractérisée en ce que, pour la commande de la partie de guidage, sont utilisés un thermostat (9), un appareil de mesure du temps, un appareil de mesure du pH, un appareil de mesure de la concentration ou un appareil de mesure du niveau, un signal continu du thermostat (9), avec la température comme grandeur physique externe, provoquant de préférence, pour deux températures proches et bien définies, dans la partie d'écoulement, une ouverture ou une fermeture définie.

12. Installation selon la revendication 1, caractérisée en ce que, du côté départ (56) de la partie d'écoulement (41, 45, 50, 122, 123, 124) est prévue une zone d'aspiration (62, 64) maintenant le fluide d'asservissement en éjection, par exemple une zone d'écoulement du courant de matière (10) ressemblant à un diffuseur.

13. Installation selon la revendication 1, caractérisée en ce que la soupape directe présente dans la partie d'écoulement et dans la partie de commande, un alésage (54, 127 ou 110, 43) l'alésage (110, 43) de la partie de commande étant plus grand que celui (54, 127) de la partie d'écoulement, pour pouvoir ouvrir et fermer rapidement celui-ci, sans choc dû à l'eau.

14. Installation selon la revendication 13, caractérisée en ce que la section transversale libre de sortie de l'alésage (43, 110) de la partie de commande est commandée, par exemple au moyen d'un thermostat (9, 36).

15. Installation selon la revendication 1, caractérisée en ce que la partie de commande présente une membrane de commande (109) (figure 5).

16. Installation selon la revendication 1, caractérisée en ce que la partie d'écoulement présente une membrane d'étanchéité (124) reliée à un piston (123), cette membrane séparant le piston (123) de l'espace de départ (125).

9

0 018 566

FIG.1

FIG.2

FIG. 3

58

61

64

62

38

94    79    85    78    16

92
74

76

10
86
73

75

71

88
72

89  83  82    91    81    70    FIG.4

0 018 566

101  118  114  113          36          112   6   109  61

FIG. 5

100  103    115  105  107  110  106  104
           117

62

10

FIG. 6

120                      127              123

124

121

122         125  128

FIG.7

FIG. 8

FIG. 9

FIG. 10

6